Europäisches Patentamt

(19) European Patent Office

Office européen des brevets

(11) EP 0 628 340 B1

(12) **EUROPEAN PATENT SPECIFICATION**

(45) Date of publication and mention
of the grant of the patent:
**30.10.1996 Bulletin 1996/44**

(51) Int. Cl.$^6$: **B01D 53/34**, B01D 53/50

(21) Application number: **94114112.9**

(22) Date of filing: **27.11.1991**

(54) **Method for desulfurizing exhaust gas**

Verfahren zum Entschwefeln von Abgas

Méthode pour la désulfurisation de gaz d'échappement

(84) Designated Contracting States:
**AT DE**

(30) Priority: **28.11.1990 JP 322424/90**
**21.05.1991 JP 115954/91**
**04.07.1991 JP 164380/91**
**13.08.1991 JP 202767/91**
**10.09.1991 JP 230065/91**

(43) Date of publication of application:
**14.12.1994 Bulletin 1994/50**

(62) Application number of the earlier application in
accordance with Art. 76 EPC: **91120292.7**

(73) Proprietor: **MITSUBISHI JUKOGYO KABUSHIKI KAISHA**
**Tokyo 100 (JP)**

(72) Inventors:
- **Ichinose, Toshimitsu,**
  **c/o Nagasaki Tech. Inst.**
  **Nagasaki-shi, Nagasaki-ken (JP)**
- **Tokuda, Kimishiro,**
  **c/o Nagasaki Tech. Inst.**
  **Nagasaki-shi, Nagasaki-ken (JP)**
- **Fujioka, Yuichi,**
  **c/o Nagasaki Tech. Inst.**
  **Nagasaki-shi, Nagasaki-ken (JP)**

(74) Representative: **Henkel, Feiler, Hänzel & Partner**
**Möhlstrasse 37**
**81675 München (DE)**

(56) References cited:
**DE-A- 3 308 927**          **DE-A- 3 326 832**
**US-A- 4 587 112**

**Description**

BACKGROUND OF THE INVENTION:

Field of the Invention:

The present invention relates to a desulfurizing method for exhaust gas of boilers for use in electric power generation plant or in industry plant.

Description of the Prior Art:

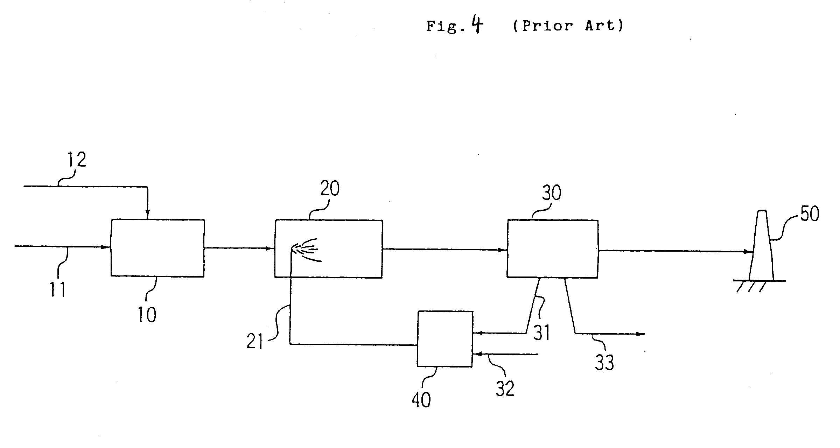

A desulfurizing method and a desulfurizing apparatus for combustion exhaust gas of a combustion furnace in a boiler or the like in the prior art, is shown in Fig. 4.

In this figure, pulverized coal 11 and pulverised limestone ($CaCO_3$) 12 are fed to a combustion furnace 10, and desulfurization within furnace is carried out. $SO_x$ component in the combustion gas exhausted from the combustion furnace 10 is further desulfurized in a desulfurizing flue 20 in which slurry 21 is sprayed. This slurry 21 is produced by mixing a part 31 of fly ash collected from the combustion gas exhausted from the desulfurizing flue 20 by means of an electrostatic precipitator (hereinafter called EP) 30 with water 32 in a mixing machine 40.

In the slurry 21 produced by mixing the fly ash collected by means of the EP 30 with water is contained $Ca(OH)_2$ produced from the limestone fed into the combustion furnace 10, and through the following reaction, desulfurization of combustion gas in the desulfurizing flue 20 is effected by the slurry 21:

$$Ca(OH)_2 + SO_2 + 1/2\ O_2 \rightarrow CaSO_4 + H_2O$$

In these desulfurizing method and desulfurizing apparatus in the prior art, in order to operate EP 30 stably, gas temperatures at an inlet and an outlet of the desulfurizing flue 20 are set at temperatures sufficiently higher than a saturation temperature.

The remainder 33 of the fly ash collected in the EP 30 is subjected to predetermined treatment as EP ash. Also, the gas having dust such as the fly ash and the like removed in the EP 30 is released to the atmosphere through a stack 50.

The furnace desulfurization by means of limestone 12 in the above-described combustion furnace 10 is carried out as represented by the following formulae:

$$CaCO_3 \rightarrow CaO + CO_2 \quad CaO + SO_2 + 1/2\ O_2 \rightarrow CaSO_4$$

In addition, the desulfurization by means of slurry in the above-mentioned desulfurizing flue 20 is carried out as represented by the following formulae:

$$CaO + H_2O \rightarrow Ca(OH)_2 \quad Ca(OH)_2 + SO_2 + 1/2\ O_2 \rightarrow CaSO_4 + H_2O$$

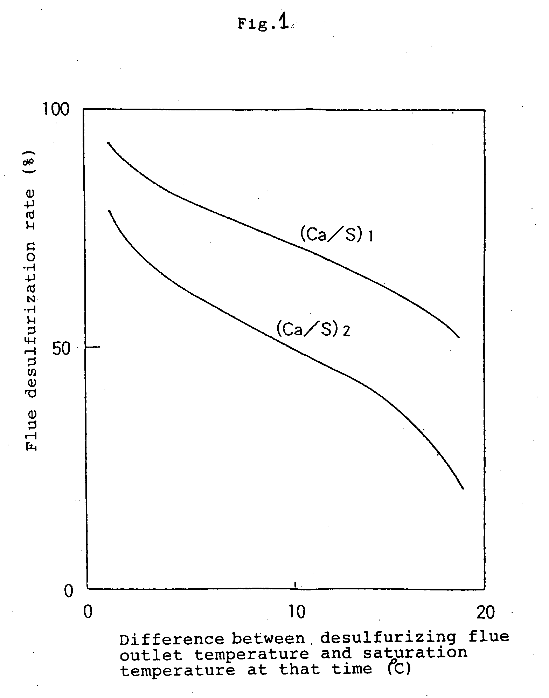

However, in the above-described desulfurizing method and apparatus in the prior art, a desulfurization rate in the desulfurizing flue 20 is poor. Desulfurization here is the more effective, the lower a gas temperature is as shown in Fig. 1.

It is to be noted that in Fig. 1, curve $(Ca/S)_1$ shows the case where unreacted CaO is present in a large amount as compared to the case represented by curve $(Ca/S)_2$.

However, taking into consideration a stable operation in the EP 30 in the next step of the process, the gas temperature cannot be largely lowered in order to avoid inconveniences such as a sticky condition caused by moisture, and hence, a desulfurization rate in the desulfurizing flue 20 could not be raised.

In addition, in the desulfurizing flue 20, unreacted quick lime (CaO) after desulfurization has been once carried out within the combustion furnace, is utilized, this is converted into slurry and desulfurization through a gas/liquid reaction is effected, but since the quick lime converted into slurry has a very poor reactivity of desulfurization as CaO because it takes the state where pure CaO is surrounded by $CaSO_4$ of the reaction product.

At the time of the above-described desulfurization in the prior art, while desulfurization based on the reaction of:

$$SO_2 + Ca(OH)_2 + 1/2\ O_2 \rightarrow CaSO_4 + H_2O$$

is effected in the desulfurizing flue 20 as described above when a temperature is sufficiently high, at a temperature of about 60°C - 80°C calcium sulfite ($CaSO_3$) is produced through the following reaction:

$$SO_2 + Ca(OH)_2 \rightarrow CaSO_3 + H_2O$$

Though this $CaSO_3$ is collected in the EP 30, it has the following characteristics:

(a) This $CaSO_3$ (solid) having once finished reaction, is stable and cannot be simply oxidized into $CaSO_4$ (gypsum, publicly harmless product).
(b) $CaSO_3$ is substance concerned in COD (Chemical Oxygen Demand) public pollution, and so it cannot be subjected to a simple disposal treatment.

Accordingly, the ashes 31 and 33 collected in the EP 30 would contain $CaSO_3$ of the public pollution component.

SUMMARY OF THE INVENTION:

It is therefore one object of the present invention to provide a method for desulfurizing exhaust gas which can resolve the above-mentioned problems in the prior art.

According to the present invention, there is provided a method for desulfurizing exhaust gas as claimed in claim 1.

In the method according to the present invention, when the fly ash collected from the exhaust gas flue serving as a desulfurizing flue is converted into slurry by means of aqueous hydrogen peroxide and it is used as a desulfurizing agent in the desulfurizing flue, then owing to an oxidation effect of aqueous hydrogen peroxide co-existing with $Ca(OH)_2$ originated from CaO forming an effective component of the fly ash, $SO_x$ in the exhaust gas would react and adhere to the surfaces of the fly ash almost as $CaSO_4$ rather than $CaSO_3$, and accordingly, since the amount of produced $CaSO_3$ is greatly reduced up to a value smaller than a limited value, surplus fly ash collected from the exhaust gas flue can be exhausted in itself to the outside of the system.

The above-mentioned and other objects, features and advantages of the present invention will become more apparent by reference to the following description of preferred embodiments of the invention taken in conjunction with the accompanying drawings.

BRIEF DESCRIPTION OF THE DRAWINGS:

In the accompanying drawings:

Fig. 1 is a diagram showing relations between a combustion gas temperature and a flue desulfurization efficiency in a desulfurizing flue;
Fig. 2 is a system diagram of a preferred embodiment of the present invention;
Fig. 3 is a diagram showing a relation between an amount of aqueous hydrogen peroxide ($H_2O_2/SO_2$ molecular ratio) used according to the present invention and a $CaSO_3$ generation rate; and
Fig. 4 is a system diagram showing a desulfurizing method and a desulfurizing apparatus for exhaust gas in the prior art.

DESCRIPTION OF THE PREFERRED EMBODIMENTS:

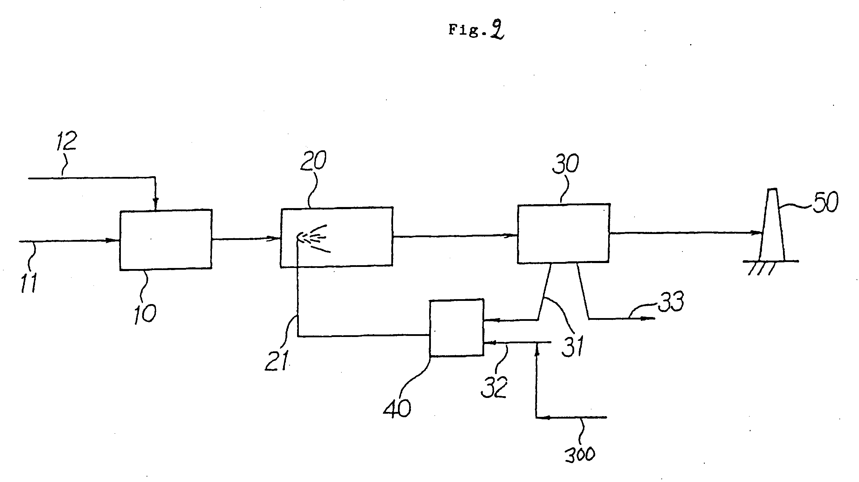

A preferred embodiment of the present invention will be described with reference to Fig. 2. In this embodiment, modification is made to the apparatus in the prior art shown in Fig. 4 such that in addition to the ash 31 collected in the EP 30 and the water 32, aqueous solution of hydrogen peroxide 300 is newly added to the mixer 40 for producing slurry 21 serving as a desulfurizing agent to be used in the desulfurizing flue 20.

In this preferred embodiment, aqueous hydrogen peroxide 300 is fed to the fly ash (recovery ash) collected from the EP 30 so that $H_2O_2/SO_2 = 3$ (molecular ratio) may be realized taking $SO_2$ in the exhaust gas flowing through the desulfurizing flue 20 as a reference. The water 32 is fed, if necessary, depending upon a concentration of the aqueous hydrogen peroxide to be fed.

Generally when limestone was not charged into the combustion furnace 10 which used dust coal (Miike coal containing sulfur of 3.1% in total), in which a flame temperature was 1500 - 1600°C and a temperature at an outlet of the furnace was 1000 - 1200°C, an $SO_2$ concentration in the exhaust gas at the outlet of the furnace was 2400 ppm, but an $SO_2$ concentration in the exhaust gas at the outlet of the combustion furnace 10 when limestone was charged, was 1440 ppm. The inlet temperature when this exhaust gas having $SO_2$ concentration of 1440 ppm enters the desulfurizing flue 20 was 90°C, the outlet temperature became 70°C, and the $SO_2$ concentration of the exhaust gas at the outlet of the desulfurizing flue 20 became 432 ppm.

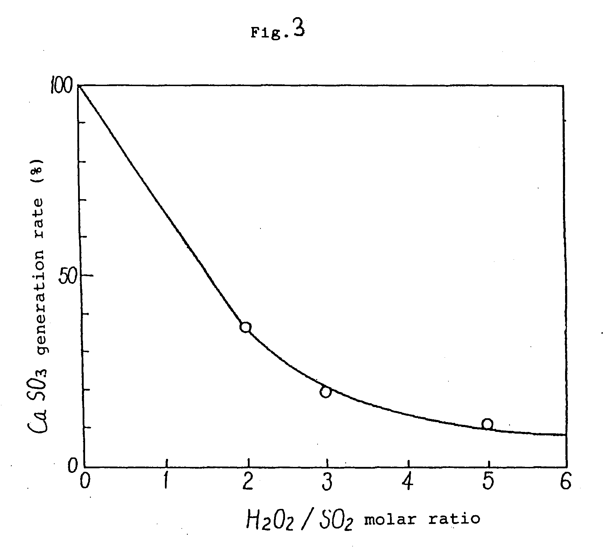

Next, description will be made on the amount of aqueous hydrogen peroxide for converting the collected fly ash into slurry. A result of investigation on a molar number of $H_2O_2$ in aqueous hydrogen peroxide, taking $SO_2$ in the exhaust gas flowing through the desulfurizing flue 20 as a reference, is shown in Fig. 3. This figure is a diagram showing a gen-

eration rate of $CaSO_3$ as a function of an amount of aqueous hydrogen peroxide ($H_2O_2/SO_2$ molecular ratio) charged into the desulfurizing flue 20 as a slurry-forming agent. This generation rate of $CaSO_3$ was investigated by analyzing the fly ash collected at the downstream of the desulfurizing flue 20.

From Fig. 3 it can said that a practically useful amount of $H_2O$ is in the range of 2 - 5 in terms of a molecular ratio of $H_2O_2/SO_2$. More particularly, because if the molecular ratio is 2 or less, a proportion of oxidation of $CaSO_3 \rightarrow CaSO_4$ is degraded, while since the proportion of oxidation becomes nearly constant at a molecular ratio of about 5, if it is used at a higher ratio, the process becomes more expensive in cost.

It is to be noted that since the particle of the collected fly ash 31 and 33 contains CaO at its center and its outer surface is covered by $CaSO_4$, it is also a favorable mode of embodiment that after the particles were ground, CaO serving as an effective component and $CaSO_4$ which is publicly harmless but has no desulfurizing effect are separated through a particle size selection method or a specific gravity selection method, then $CaSO_4$ is abandoned to the outside of the system, while a part principally consisting of CaO serving as an effective component is converted into slurry by means of aqueous hydrogen peroxide, and the slurry is used as a desulfurizing agent in the desulfurizing flue.

While description was made above by exemplifying an EP as a collecting device for fly ash, it is a matter of course that a cyclone, a bag filter or the like can be also used.

In the desulfurizing method for exhaust gas according to the present invention, calcium sulfite ($CaSO_3$) acting as publicly harmful substance would not be produced, only an amount less than a limited value thereof is exhausted to the outside of the system, hence treatment for preventing public pollution in the subsequent step of the process is unnecessary, and so, a cost can be reduced.

## Claims

1. A method for desulfurizing exhaust gas, wherein desulfurization within a combustion furnace by means of added limestone is followed by desulfurization of the exhaust gases within an exhaust gas flue serving as a desulfurizing flue, the fly ash produced after desulfurization within the exhaust gas flue is collected, characterized in that said fly ash is converted into slurry by means of aqueous hydrogen peroxide (300), and the slurry is used as a desulfurizing agent within the exhaust gas flue.

## Patentansprüche

1. Verfahren zum Entschwefeln von Abgas, wobei der Entschwefelung in einem Verbrennungsofen (10) mit Hilfe von zugesetztem Kalkstein eine Entschwefelung der Abgase in einem als Entschwefelungskamin dienenden Abgaskamin nachgeschaltet ist und die nach der Entschwefelung in dem Abgaskamin angefallene Flugasche gesammelt wird, dadurch gekennzeichnet, daß die Flugasche mit wäßrigem Wasserstoffperoxid (300) in eine Aufschlämmung überführt und die Aufschlämmung in dem Abgaskamin als Entschwefelungsmittel verwendet werden.

## Revendications

1. Procédé pour désulfurer des gaz d'échappement, dans lequel la désulfuration dans un four de combustion au moyen de calcaire ajouté est suivie par la désulfuration des gaz d'échappement dans une conduite de gaz d'échappement servant de conduite de désulfuration et les cendres volantes produites après la désulfuration dans la conduite de gaz d'échappement sont recueillies, caractérisé en ce que lesdites cendres volantes sont converties en une pâte épaisse au moyen de peroxyde d'hydrogène aqueux (300) et que la pâte est utilisée comme agent de désulfuration dans la conduite d'échappement des gaz.

Fig.1

Difference between desulfurizing flue
outlet temperature and saturation
temperature at that time (°C)

EP 0 628 340 B1

Fig. 2

Fig.3

EP 0 628 340 B1

Fig. 4  (Prior Art)

12

11

10

20

21

30

31

32

33

40

50